# EUROPEAN PATENT SPECIFICATION

(11) **EP 1 693 984 B1**
(45) Date of publication and mention of the grant of the patent: **16.04.2008**
(21) Application number: 05772490.8
(22) Date of filing: 11.08.2005
(51) Int. Cl.: H04L 29/06, H04L 12/14

(54) **A PROCESSING METHOD BASED ON CHARGING TRIGGER EVENT AND RE-AUTHORISATION EVENT OF PACKET DATA FLOW**
VERARBEITUNGSVERFAHREN AUF DER BASIS EINES CHARGING-TRIGGER-EREIGNISSES UND EINES NEUAUTHORISATIONSEREIGNISSES EINES PAKETDATENFLUSSES
METHODE DE TRAITEMENT FONDEE SUR UN EVENEMENT DE DECLENCHEMENT DE CHARGEMENT ET SUR UN EVENEMENT DE REAUTORISATION DE FLUX DE DONNEES DE PAQUETS

(30) Priority: 11.08.2004 CN 200410059148
(43) Date of publication of application: 23.08.2006
(73) Proprietor: Huawei Technologies Co., Ltd., 518129 Longgang District, Shenzhen (CN)
(72) Inventor: DUAN, Xiaoqin, Huawei Administration Building, 518129 Shenzhen Guangdong (CN)
(74) Representative: Charles, Glyndwr
(86) International application number: PCT/CN2005/001238
(87) International publication number: WO 2006/015548

(56) References cited:
- EP-A1- 1 296 481
- WO-A2-01/91446
- CN-A- 1 450 749
- JP-A- 7 336 464
- US-A1- 2003 153 333
- "3rd Generation Partnership Project" 3GPP TS 23.125 V6.0.0, XX, XX, March 2004 (2004-03), pages 1-29, XP002391829
- "3rd Generation Partnership Project" ETSI STANDARDS, EUROPEAN TELECOMMUNICATIONS STANDARDS INSTITUTE, SOPHIA-ANTIPO, FR, vol. 3-SA2, no. V110, 2003, XP014031384 ISSN: 0000-0001

## Description

### Field of the Technology

The present invention relates to IP flow charging techniques, more particularly to a method for handling flow-based charging trigger event and re-authorization event.

### Background of the Invention

Along with more and more widely employed IP flow services, how to charge IP flow services accurately and reasonably has brought out common attentions of service providers.

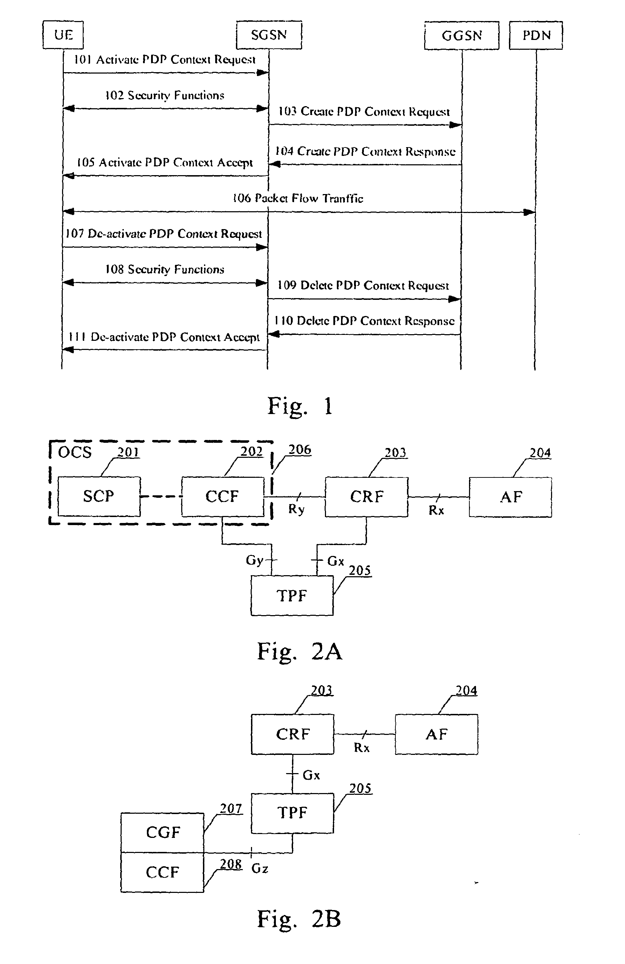

Figure 1 shows a flowchart of Packet Data Protocol (PDP) Context activation, data transmission, and PDP Context de-activation. As shown in Figure 1, in General Packet Radio Service (GPRS), the process of a PDP Context activation, data interaction with an external Packet Data Network (PDN), and PDP Context de-activation comprise the following steps:
Step 101: a mobile station (MS) sending an Activate PDP Context Request to a Serving GPRS Support Node (SGSN). The said Activate PDP Context Request carries such information as Network Layer Service Access Point Identifier (NSAPI), PDP type, Access Point Name (APN), required Quality of Service (QoS) parameter, Transaction Identifier (TI), and etc., where NSAPI which is as a component of the Tunnel Identifier (TID) between the SGSN and a Gateway GPRS Support Node (GGSN), is used for identifying a PDP Context; the type of PDP refers to the type of Peer-Peer Protocol (PPP), or the type of Internet Protocol (IP), or etc.; APN may be provided by MS to SGSN for addressing an appropriate GGSN, and the said GGSN can determine the external network that the MS desires to access according to the APN, while MS provides no APN to the SGSN, the SGSN will select a default APN according to the subscription information of the MS; the said QoS parameter refers to the requirement of the packet data service quality designated by the MS; and TI is provided to the MS for identifying a PDP Context.
Step 102: upon receiving the Activate PDP Context Request, SGSN carrying out a security check and encryption process to MS, which step is optional.
Step 103: SGSN resolving the address information of GGSN according to the APN, if SGSN can resolve the address of GGSN according to the APN, it will create a TEID for the PDP Context. The TEID can be a combination of International Mobile Subscriber Identity (IMSI) and NSAPI. Then SGSN will send to GGSN a Create PDP Context Request. The request carries such information as PDP type, PDP address, APN, QoS parameter, TEID, and mode of selection, where the PDP address may be the IP address of the MS, which is optional and not necessarily carried by the Create PDP Context Request. When the PDP address is not carried by the request, in the subsequent process, the IP address of the MS should be assigned by GGSN or by the PDN which finally set up a connection with the MS. The mode of selection refers to the selection mode of APN, i.e. APN is selected by MS or by SGSN. If SGSN can not resolve the address of GGSN, SSGN will reject the Activate PDP Context Request sent by the MS.
Step 104: upon receiving the Create PDP Context Request, GGSN determining an external PDN according to APN, and assigning a charging ID, starting charging, and negotiating about the QoS parameter. If GGSN can meet the requirements of the service quality defined by the QoS parameter, returning to SGSN a Create PDP Context Response, which carries such information as TEID, PDP address, backbone bearer protocol, negotiated QoS parameter, and charging ID. If GGSN can not meet the requirements of service quality defined by the QoS parameter, rejecting the Create PDP Context Request sent by the SGSN, and then SGSN rejecting the Activate PDP Context Request sent by the MS.
Step 105: upon receiving the Create PDP Context Response, SGSN inserting in the PDP Context a NSAPI for identifying the PDP Context and the address of GGSN, and selecting the radio priority according to the negotiated QoS parameter, and then returning to the MS an Activate PDP Context Accept, which carries such information as the PDP type, PDP address, TI, negotiated QoS parameter, radio priority, and configuration options of PDP. Meanwhile, SGSN will start charging process. Upon receiving the Activate PDP Context Accept, the MS knows that the direct route between the MS and GGSN has been set up and the transmission of packet data can be carried out.
Step 106: the MS interacting packet data with PDN via SGSN and GGSN.
Step 107: after completing the interaction of packet data, the MS sending to SGSN a De-activate PDP Context Request, which carries TI.
Step 108: upon receiving the De-activate PDP Context Request, SGSN carrying out a security check and encryption process to MS, which is optional.
Step 109~Step 111: SGSN sending to GGSN a Delete PDP Context Request, which carries TEID. Upon receiving the Delete PDP Context Request, GGSN ending the charging process for the MS, deleting the PDP Context corresponding to the TEID, and then sending to SGSN a Delete PDP Context Response, which carries TEID. Upon receiving the Delete PDP Context Response, SGSN ending the charging process for the MS, deleting the PDP Context corresponding to the TEID, and then sending to the MS a De-activate PDP Context Accept, which carries the TI. Upon receiving the De-activate PDP Context Accept, MS deleting the PDP Context corresponding to the TI.

It can be seen from the process shown in Figure 1 that, in the current GPRS charging system, the starting point of charging is set at the time as the PDP Context is activated while the ending point thereof is set at the time as the PDP Context is deleted, thus charging can only be carried out according to the volume of the data flow transmitted in a PDP Context or according to the time duration of the activation of a PDP Context. In an actual network, however, after the data interaction between the MS and PDN, it is possible for the MS to carry out various services based on an activated PDP Context, i.e. if the PDN is able to provide various services, such as Email, WAP-based browsing, and FTP-based file transmission, etc, the said various services provided by this PDN can be carried in an activated PDP Context after the MS setting up a transmission channel with the said PDN. However, the service may provide different charging policies for different services, for example, the email service should be charged according to the number of the sending events and receiving events triggered, the WAP browsing service should be charged according to the volume of the data flow, and the file transmission service should also be charged according to the volume of the data flow, while the charging rate of the WAP browsing service should not be exactly the same to that of the file transmission service. However, the current GPRS charging system can not carry out differentiated charging policies for different services bear in one PDP Context.

Aimed at the above, the 3rd Generation Partnership Project 3GPP TS 23.125 V6.0.0, March 2004, pages 1-29, is discussing how to implement IP Flow Based Charging (FBC). In terms of a packet data service, here a packet flow can be an IP flow, all the IP flows transmitted and received when the MS uses the service are referred to Service Data Flow, that is, the service data flow is a set of a plurality of IP data flows, thus IP flow based charging can truly reflect the amount of resources occupied by a certain service data flow. IP flow based charging may be considered as filtering IP flows of various services in one PDP Context bearers with different filters and then the IP flows picked out by different filters could be applied for different charging policy, respectively. Therefore, the charging granularity of the IP flow based charging is far smaller than the charging granularity of a PDP Context based charging. The granularity can be referred to the size of the hole of a sieve, the charging granularity of a PDP Context based charging means that one PDP Context is used as a hole size of the sieve, while the charging granularity of the IP flow based charging means that each IP service data flow is used as a hole size of the serve, i.e. a plurality of sieve holes are used in connection with one PDP Context. Thus, comparing to a PDP Context based charging, an IP flow based charging provides the operator or service provider with more flexible approaches of charging.

The system architecture, functional specifications, and message interaction processes of FBC have been described in 3GPP. Fig.2A shows the architecture of an FBC system supporting on-line charging, where Service Control Point (SCP) 201 of Customized Application for Mobile Network Enhanced Logic (CAMEL) and Service Data Flow Based Credit Control Function (CCF) 202 constitute an Online Charging System (OCS) 206. CCF 202 inter-works with Service Data Flow Based Charging Rule Function (CRF) 203 via an interface Rx, CRF 203 inter-works with Application Function (AF) 204 via an interface Rx, CRF 203 inter-works with Traffic Plane Function (TPF) 205 via an interface Gx, and CCF 202 inter-works with TPF 205 via an interface Gy.

The architecture of a FBC system supporting off-line charging is shown in Fig.2B, where CRF 203 inter-works with AF 204 via the interface Rx, CRF 203 inter-works with TPF 205 via the interface Gx, and TPF 205 inter-works via an interface Gz with Charging Gateway Function (CGF) 207 and Charging Collection Function (CCF) 208, respectively.

Said TPF 205 bears an IP flow. When a bearer of the IP flow is established, TPF 205 will send a request for charging rule to CRF 203 via the interface Gx. The said charging rule request carries the information related to the user and MS, the bearer characteristics as well as network related information, where information related to the user and MS may be the international number of Mobile Station Integrated Service Data Network (MSISDN), or the International Mobile Subscriber Identity (IMSI) etc, and the information related to the network can be Mobile Network Code (MNC), or Mobile Country Code (MCC), or etc. In addition, during the transmission process of the IP flow, modifications can be made to the bearer, for instance, re-negotiating the QoS parameter such that the charging rule may be changed with different QoS parameters of the same service the user uses, e.g. the charging rate may drop with the descending of the QoS parameter. In this case, when modification is made to the bearer, TPF 205 may send a charging rule request to CRF 203 again to request a new charging rule; CRF 203 selects an appropriate charging rule based on the above input information provided by TPF 205, and then returns to TPF 205 the selected charging rule. The charging rule comprises such information as the charging mechanism, charging type, charging key, filter of the service data flow, and priority of the charging rules, where the charging mechanism is the mode of charging, which can be on-line charging or off-line charging; the charging type can be time based charging or volume based charging or time-volume based charging; the charging key is a parameter associated with the charging rate, i.e. CRF 203 may not provide TPF 205 with the charging rate directly, instead, it can provide TPF 205 with only a parameter associated with the charging rate. The filter of the service data flow is used for instructing TPF 205 which IP flow is to be filtered, and then TPF 205 will record the filtered IP flows according to the charging rule. The filter of service data based on the IP 5 tuple, which includes such information as source/destination IP address, source/destination port number, and protocol ID. For example, CRF 203 may instruct TPF 205 to filter an IP flow with the source address 10.0.0.1, the destination address 10.0.0.2, the source/destination port number 20, and the protocol type TCP, and charge the filtered IP flow according to the charging rule.

CRF 203 can provide TPF 205 with event triggers so as to make TPF 205 request CRF 203 for new charging rules when specific event occurs, for example, CRF 203 may make TPF 205 request CRF 203 for new charging rules when bearer modification occur. Event triggers can be deemed as events related to charging rules.

Apart from selecting an appropriate charging rule based on the input information provided by TPF 205, CRF 203 can also select appropriate charging rules based on the input information provided by AF 204 or OCS 206, for example, AF 204 may inform CRF 203 of the service type that the user is currently using, then CRF 203 will select an appropriate charging rule based on the said service type.

OCS 206 consists of two functional entities, SCP 201 and Service Data Flow Based Credit Control Function (CCF) 202, where CCF 202 is the functional entity for credit control and is only used in an on-line charging system, which can be realized by adding new functions to the existing OCS 206. In the process of on-line charging, CCF 202 manages and controls the users' credits, when the user uses the service, CCF 202 authorizes the credits in the credit pool of the user, and sends to TPF 205 via the interface Gy the credits available to the user.

In addition, OCS 206 may require TPF 205 to request re-authorization of the credit when re-authorization triggers occur. After that, OCS 206 will re-authorize the user based on the corresponding re-authorization triggers reported by TPF 205 and may possibly re-calculate the user's credits. For example, when the user's credits provided to TPF 205 by OCS 206 have been run out, TPF 205, according to the detection of credit authorization lifetime expiry, which matches the re-authorization triggers, needs to report to OCS 206 the credit authorization lifetime expiry event is occurred; and then OCS 206 re-calculates the credits available to the user according to the balance of the user's account. For another example, when area based charging policy is applied, OCS 206 determines the charging rate according to the current location of the user and calculates the user's credits based on the charging rate; when the user moves to another location, if SGSN changes, TPF 205, according to the detection of SGSN change, which matches the re-authorization triggers, the TPF reports to OCS 206 the SGSN change event is occurred, and the OCS re-determines the charging rate based on the updated current location of the user and recalculates the user's credits. For yet another example, OCS determines the charging rate based on the current QoS parameter of the service used by the user, when the QoS parameter is modified, TPF, according to the bearer modification, which matches the re-authorization triggers, needs to report to OCS 206 the bearer modification event is occurred, and OCS 206 then determines the charging rate based on the modified QoS parameter and re-calculates the user's credits.

In a GPRS network, TPF 205 refers to GGSN, AF refers to a service gateway or a service server in the PDN and CRF 203 refers to a newly-added logic entity. TPF 205 is the performing point of charging rules, while CRF 203 is the controlling point of charging rules.

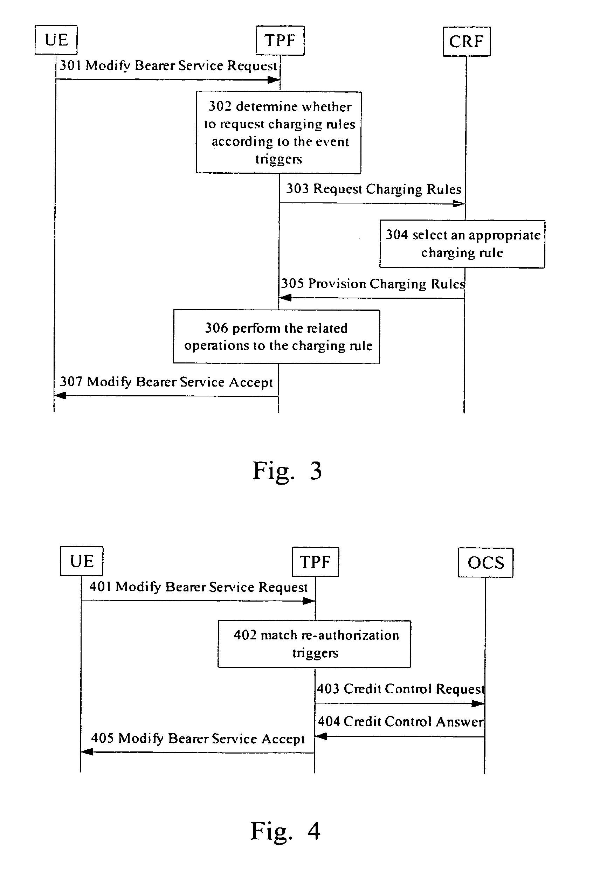

So far, 3GPP has defined the process of performing a charging rule request by the occurrence of an event trigger while charging on-line when the bearer is modified, i.e. the process of TPF requesting a charging rule from CRF at the occurrence of an event trigger, as shown in Figure 3:
Step 301: a User Equipment (UE) sends a Modify Bearer Service Request to TPF. In a GPRS network, it equivalents to that GGSN receives an Update PDP Context Request.
Step 302: upon receiving the Modify Bearer Service Request, TPF compares the Modify Bearer event with the pre-stored event triggers, if these two match, proceed to step 303; otherwise, continue to monitor the occurrences of event triggers.
Step 303: TPF sends to CRF a Request Charging Rules, which carries the relevant input information for charging rule selection.
Step 304~step 305: upon receiving the Request Charging Rules, CRF selects an appropriate charging rule basing on the available information to the CRF (e.g. information may be available from the AF and the information received from the TPF)., and then returns to TPF a Provision Charging Rules, which carries the selected charging rule and the actions thereof.
Step 306: upon receiving the Provision Charging Rules, TPF performs the related charging rule actions on the charging rule selected by CRF, i.e. the charging rules may need to be installed, and/or removed, and/or modified.
Step 307: TPF returns to the UE a Modify Bearer Service Accept, and continues with the subsequent process of bearer modification.

While on-line charging, bearer modifications will trigger a re-authorization process, i.e. TPF will ask OCS to re-authorize the credit of the user, the specific implementation of which is shown in Figure 4:
Step 401: a UE sends a Modify Bearer Service Request to TPF. In a GPRS network, it equivalents to that GGSN receives an Update PDP Context Request.
Step 402: upon receiving the Modify Bearer Service Request, TPF compares the Modify Bearer event with the pre-stored re-authorization triggers, if these two match, proceed to step 403; otherwise, continue to monitor the occurrence of re-authorization triggers.
Step 403: TPF sends to OCS a Credit Control Request, which carries the balance of the user's credits and information related to the charging rule, requesting OCS to re-calculate the credits of the user. The information related to the charging rule provided by TPF for OCS may come from CRF.
Step 404: upon receiving the Credit Control Request, OCS re-calculates the credits of the user and then returns to TPF a Credit Control Answer. If OCS obtains by calculating the user's credits, the Credit Control Answer will carry the user's credits re-calculated by OCS; if OCS fails to calculate the user's credits, the Credit Control Answer may carry the error cause value.
Step 405: upon receiving the Credit Control Answer, TPF returns to the UE a Modify Bearer Service Accept. If the Credit control Answer carries the user's credits, TPF will accept the Modify Bearer Service Request sent by the UE and continue with the subsequent process of bearer modification; if the Credit Control Answer carries no user's credits, TPF will reject the Modify Bearer Service Request sent by the UE.

At present, there are descriptions made on the charging mode in which CRF controls the bearer event occurred in TPF by means of providing the event-trigger to the TPF in the specifications, i.e. TPF reports to CRF after detecting the occurrence of an event trigger, CRF learns that the bearer has modified by the event trigger reported by TPF and then selects an appropriate charging rule and sends the charging rule to TPF. The event triggers defined in the specifications may include PLMN change event, QoS change event, RAT (Radio Access Technique) type change event, and TFT (Transmission Flow Template) change event.

In addition, there are descriptions made on how OCS controls the credit consumed in TPF by means of providing re-authorization triggers to the TPF in the specifications, i.e. TPF reports to OCS after detecting the occurrence of re-authorization triggers, OCS learns the consumed credit of the user and the modification of the bearer according to the re-authorization trigger reported by TPF, and re-calculates the user's credits and sends the credits to TPF. The re-authorization triggers defined in the specifications may include credit authorization lifetime expiry event, idle timeout event, charging rule change event, as well as some GPRS events, such as SGSN change event, QoS change event, and RAT type change event.

It can be seen from the above descriptions that both event triggers and re-authorization triggers include bearer events, such as SGSN change, QoS parameter change, and RAT type change. Thus, when a certain bearer event trigger occurs, TPF will match this bearer event with both event triggers and re-authorization triggers, accordingly, it is necessary to report this bearer event to CRF and OCS, respectively.

In case that TPF first reports a re-authorization trigger to OCS, and then reports an event trigger to CRF, as it is possible for CRF selecting a new charging rule according to the received event trigger and sending the newly selected charging rule to TPF, the newly selected charging rule issued to TPF by CRF is likely to match the charging rule event in the re-authorization triggers, which will re-trigger a re-authorization process, making the first re-authorization process redundant and wasting the interface resources between TPF and OCS in an FBC system.

### Summary of the Invention

In view of the above, the present invention is to provide a method for handling event triggers and re-authorization triggers in flow based charging so as to improve the re-authorization process in flow based charging.

To attain the above object, the present invention provides a method for handling event triggers and re-authorization triggers in flow based charging, the method comprising the following steps:
(A) TPF determining whether the bearer event matches an event trigger, if it matches, proceeding to step B, and otherwise, proceeding to step C;
(B) TPF performing a charging rule request process;
(C) TPF determining whether the bearer event matches a re-authorization trigger, if it matches, said TPF performing a re-authorization process, and otherwise, ending the current process.

The said step B comprises: TPF requesting CRF for a charging rule, and CRF returning to TPF a selected charging rule.

The said step B further comprising: TPF providing CRF with the bearer event currently occurred,
wherein the said step B further comprising: the TPF determining whether the charging rule provided by CRF is changed, if it does, the TPF performing a re-authorization process, and otherwise, proceeding to step C

In the said step B, if the TPF determines the charging rule provided by CRF is changed, before the TPF performing a re-authorization process, further comprising: TPF determining whether a re-authorization is needed due to the changed charging rule, if it is, TPF performing a re-authorization process, and otherwise, proceeding to step C.

In the said step B, if the TPF determines a re-authorization is needed due to the changed charging rule, before the TPF performing a re-authorization process, further comprising: TPF determining whether the bearer event currently occurred matches a re-authorization trigger, if it matches, TPF performing a re-authorization process, and providing OCS with the bearer event currently occurred, and otherwise, TPF only performing a re-authorization process.

The said performing a re-authorization process further comprising: TPF providing OCS with the changed charging rule.

The said performing a re-authorization process further comprising: TPF providing OCS with the bearer event currently occurred.

The said performing a re-authorization process comprises: TPF requesting re-authorization of the credit in the OCS, and further OCS returning to TPF the authorized credit.

The said event triggers are provided to TPF by CRF.

The said re-authorization triggers are provided to TPF by OCS or via CRF by OCS.

In accordance with the method disclosed by the present invention, when a bearer event occurs, TPF first estimates whether the occurred bearer event matches an event trigger, if it matches, reports the occurred event trigger to CRF; then estimates whether the occurred bearer event matches a re-authorization trigger, if it matches, reports the re-authorization trigger to OCS and continues with the subsequent re-authorization process. In this way, only one interaction for re-authorization is needed between TPF and OCS, which optimizes the re-authorization process when there is overlap between the event triggers and re-authorization triggers and improves the re-authorization process in flow based charging.

### Brief Description of the Drawings

Figure 1 shows a flowchart of a PDP Context activation, data interaction, and PDP Context de-activation process;
Figure 2A shows the architecture of an FBC system supporting on-line charging;
Figure 2B shows the architecture of an FBC system supporting off-line charging;
Figure 3 shows the flowchart of triggering TPF sending a request to CRF for a charging rule by an event trigger in the prior art;
Figure 4 shows the flowchart of triggering TPF sending a request to OCS for re-authorization by a re-authorization trigger in the prior art;
Figure 5 shows the flowchart of handling event triggers and re-authorization triggers in accordance with the present invention;
Figure 6 is a schematic diagram illustrating the message interaction in the process of handling event triggers and re-authorization triggers in accordance with the present invention.

### Detailed Description of the Invention

In order to make the object, solution and merits of the present invention clearer, preferred embodiments of the present invention are hereinafter described in more detail with reference to the accompanying drawings.

In accordance with the present invention, when a bearer event occurs, TPF first determines whether the bearer event occurred matches an event trigger, if it matches, requesting charging rules from CRF; then TPF decides whether the occurred bearer event matches a re-authorization trigger, if it matches, the TPF performing a re-authorization process. In this way, only one interaction for re-authorization is needed between TPF and OCS, which optimizes the re-authorization process when there is overlap between event triggers and re-authorization triggers.

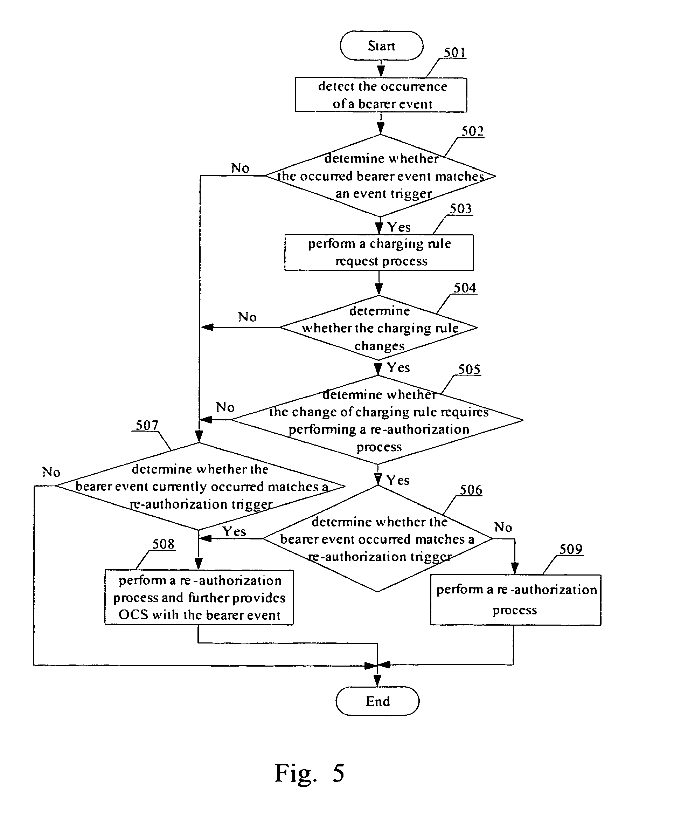

Figure 5 shows the flowchart in accordance with the present invention for handling event triggers and re-authorization triggers. As shown in Figure 5, the process of handling event triggers and re-authorization triggers comprises the following steps:
Steps 501~502: TPF detects the occurrence of a bearer event and determines whether the occurred bearer event matches an event trigger, if it matches, proceed to step 503; otherwise proceed to step 507.
Step 503: TPF requests the charging rules from CRF, i.e. TPF provides CRF with the input information for selecting a charging rule, and further provides CRF with the bearer event currently occurred so as to inform CRF of the event trigger currently triggered the charging rule request process and request CRF to provide a charging rule; upon receiving the charging rule request, CRF selects a charging rule according to the input information and bearer event provided, and provides TPF with the selected charging rule and actions thereof. After receiving the charging rule provided, TPF performs the related charging rule actions on the charging rule selected by CRF.
Step 504: TPF determines whether the charging rule provided by CRF changes, if it does, proceed to step 505; otherwise, proceed to step 507.
Step 505: TPF determines whether a re-authorization is needed due to the changed charging rule, if it is, proceed to step 506; otherwise, proceed to step 507.
Step 506: TPF determines whether the bearer event currently occurred matches a re-authorization trigger, if it matches, proceed to step 508; otherwise, proceed to step 509.
Step 507: TPF determines whether the bearer event currently occurred matches a re-authorization trigger, if it matches, proceed to step 508; otherwise, end the current process.
Step 508: TPF performs a re-authorization process, i.e. TPF provides OCS with the information about the balance of the user's credits and the related charging rule, requests OCS to re-calculate the user's credits, and further provides OCS with the bearer event currently occurred to inform OCS of the re-authorization trigger that triggers the re-authorization process; and then OCS provides TPF with the re-calculated user's credits, and then ends the current process.
Step 509: TPF performs a re-authorization process, i.e. TPF provides OCS with the information about the balance of the user's credits and the related charging rule, and requests OCS to re-calculate the user's credits, and then OCS provides TPF with the re-calculated user's credits.
Step 506 may also be performed at any time between step 501~step 505, so long as TPF determines that the bearer event currently occurred matches a re-authorization trigger, TPF will, when performing a re-authorization process in the subsequent step 508, further provide OCS with the event currently occurred, in order to inform OCS the detected re-authorization trigger.

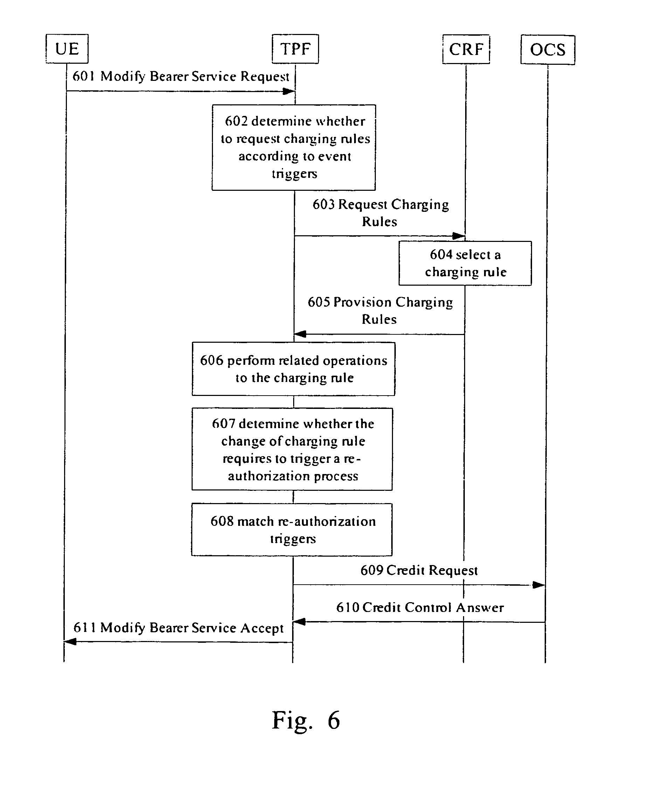

Figure 6 is a schematic diagram illustrating the message interaction in the process of handling event triggers and re-authorization triggers in accordance with the present invention. As shown in Figure 6, the message interaction in the process of handling event triggers and re-authorization triggers comprises the following steps:
Step 601 is the same with step 301.
Step 602: upon receiving the Modify Bearer Service Request, TPF compares the bearer modification event currently occurred with the pre-stored event triggers, if they match, proceed to step 603; otherwise, go directly to step 608.

When a bearer is set up, the specific process of implementation is as follows: while charging on-line, when a bearer is set up, TPF sends to CRF a charging rule request, which carries the input information about the charging rule, such as the information of UE, bearer characteristics, information of the network and etc.; CRF selects an appropriate charging rule according to the received input information, and furthermore, based on the input information provided by TPF, determines the event triggers to be monitored by TPF, and then sends the charging rule and event triggers to TPF.

In addition, when a bearer is modified, CRF may also provide TPF with the event triggers to be monitored by TPF, i.e. when an event trigger occurs, TPF will report to CRF the occurred event trigger; upon receiving the event trigger reported by TPF, CRF may continue to issue new event triggers. When CRF receives the input information provided by external entities, such as AF and OCS, CRF may provide TPF as well with the event triggers to be monitored by TPF, i.e. CRF may unsolicited provide event triggers to TPF.

Upon receiving the charging rule and event triggers provided by CRF, TPF monitors the occurrence of event triggers, filters the appropriate IP flows according to the filter of the charging rule, and then charges the filtered IP flows using the said appropriate charging rule.

OCS may directly provide TPF with the re-authorization triggers which TPF is required to monitor. For example, in the authorization process, TPF sends to CRF a Credit Request; upon receiving the Credit Request, OCS calculates the user's request and returns to TPF a Credit Answer, which may further carry the re-authorization triggers in addition to the user's credits, and TPF is required to monitor the re-authorization triggers, i.e. when the re-authorization trigger occurs, TPF will report to OCS the re-authorization trigger currently occurred. OCS may also provide re-authorization triggers to TPF via CRF.

In addition, when a re-authorization trigger occurs, TPF will report to OCS the re-authorization trigger currently occurred; after receiving the re-authorization trigger reported by TPF, OCS may again provide new re-authorization triggers to TPF.
Step 603: TPF sends to CRF a Charging Rule Request, which carries the input information provided for CRF to determine the charging rule, and which may further carries the related bearer event currently occurred to inform CRF of the event trigger that triggers the current charging rule request process.
Step 604~Step 606 are the same with step 304~step 306.
Step 607: TPF determines whether the charging rule provided by CRF has been changed, if the rule has been changed, further determines whether a re-authorization is needed due to the changed charging rule, if it is, continue with step 608; if the charging rule has been not changed or the a re-authorization is not needed due to the changed charging rule,, proceed to step 608.
Step 608: TPF compares the bearer modification event currently occurred with the pre-stored re-authorization triggers, if they match, proceed to step 609; otherwise, TPF continues to determines whether there is the need for performing a re-authorization process determined in step 607, if there is the need, proceed to step 609, if there is no need, go directly to step 611.
Step 609: TPF sends to OCS a Credit Request, which carries the information of the balance of the user's credits and the relevant charging rule, requesting OCS to re-calculate the user's credits. If it is decided in step 607 that there is the need for performing a re-authorization process, the Credit Request sent by TPF to OCS may further carry the information on the modified charging rule. In addition, if it is decided in step 608 that there is the need for performing a re-authorization process, the Credit Request sent by TPF to OCS may further provide the modified bearer information of the bearer modification event.
Step 610: upon receiving the Credit Request, OCS re-calculates the user's credits, and then returns to TPF a Credit Answer, if OCS obtains by calculation the user's credits, the Credit Answer will carry the user's credits re-calculated by OCS; if OCS fails to calculate the user's credits, the Credit Answer will carry the error cause value.
Step 611: TPF returns to the UE a Modify Bearer Service Response and determines according to the result of the above processing whether to accept the Modify Bearer Service Request, if it is determined to accept the request, continue with the subsequent bearer modification process; otherwise, reject the bearer modification request. For example, if the Credit Answer carries the user's credits, TPF will accept the Modify Bearer Service Request sent by the user and continue with the subsequent bearer modification process; if the Credit Answer carries no user's credits, TPF will reject the Modify Bearer Service Request sent by the user.

In the above process, in step 607, when TPF determines there is change in the charging rule, and the charging rule change event requires performing a re-authorization process, go directly to step 609 without performing step 608.

To sum up, the foregoing description is only a preferred embodiment of the present invention and not to be construed as limiting the scope thereof.

## Claims

1. A method for handling event triggers and re-authorization triggers in flow based charging, comprising the steps:
A, Traffic Plane Function, TPF determining whether a bearer event matches an event trigger, if it matches, proceeding to step B, and otherwise, proceeding to step C;
B, TPF requesting the charging rules from Charging Rule Function, CRF;
C, TPF determining whether the bearer event matches a re-authorization trigger, if it matches, said TPF performing a re-authorization process, and otherwise, ending the current process.

2. A method according to Claim 1, wherein the said step B further comprises: TPF requesting CRF for a charging rule, and CRF returning to TPF a selected charging rule.

3. A method according to Claim 2, wherein the said step B further comprising: TPF providing CRF with the bearer event currently occurred.

4. A method according to Claim 2, wherein, if TPF estimates that the bearer event matches an event trigger, wherein the said step B further comprising: the TPF determining whether the charging rule provided by CRF is changed, if it does, the TPF performing a re-authorization process, and otherwise, proceeding to step C.

5. A method according to Claim 4, in the said step B, if the TPF determines the charging rule provided by CRF is changed, before the TPF performing a re-authorization process, further comprising: TPF determining whether a re-authorization is needed due to the changed charging rule, if it is, TPF performing a re-authorization process, and otherwise, proceeding to step C.

6. A method according to Claim 4, in the said step B, if the TPF determines a re-authorization is needed due to the changed charging rule, before the TPF performing a re-authorization process, further comprising: TPF determining whether the bearer event currently occurred matches a re-authorization trigger, if it matches, TPF performing a re-authorization process, and providing Online Charging System, OCS, with the bearer event currently occurred, and otherwise, TPF only performing a re-authorization process.

7. A method according to Claim 4, wherein the said performing a re-authorization process further comprising: TPF providing OCS with the changed charging rule.

8. A method according to Claim 1, wherein the said performing a re-authorization process further comprising: TPF providing OCS with the bearer event currently occurred.

9. A method according to Claim 1, wherein the said performing a re-authorization process comprises: TPF requesting re-authorization of the credit in the OCS, and further OCS returning to TPF the authorized credit.

10. A method according to Claim 1, wherein the said event triggers are provided to TPF by CRF.

11. A method according to Claim 1, wherein the said re-authorization triggers are provided to TPF by OCS or via CRF by OCS.

## Patentansprüche

1. Verfahren zum Behandeln bzw. Abfertigen von Ereignistriggerimpulsen und Neu-Autorisierungstriggerimpulsen in fluss- bzw. strömungsbasierter Gebührenerhebung, welches die folgenden Schritte aufweist:
A. Bestimmen mit einer Traffic Plane Function bzw. Verkehrsebene-Funktion, TPF, ob ein Übermittlungsereignis zu einem Ereignistriggerimpuls passt, falls es passt, Fortfahren mit dem Schritt B, anderenfalls Fortfahren mit dem Schritt C;
B. Anfordern, mit der TPF, der Gebührenregelung von der Charging Rule Function bzw. Gebührenregelungsfunktion CRF;
C. Bestimmen, mit der TPF, ob das Übermittlungsereignis zu einem Neu-Autorisierungstriggerimpuls passt, falls es passt, Durchführen, mit der TPF, eines Neu-Autorisierungsvorgangs, und anderenfalls Beenden des aktuellen Vorgangs.

2. Verfahren nach Anspruch 1, wobei der Schritt B ferner aufweist: Anfordern, mit der TPF, von der CRF einer Gebührenregelung und Zurücksenden der CRF an die TPF einer ausgewählten Gebührenregelung.

3. Verfahren nach Anspruch 2, wobei der Schritt B ferner aufweist: Liefern, mit der TPF, des Übermittlungsereignisses, welches aktuell aufgetreten ist, an die CRF.

4. Verfahren nach Anspruch 2, wobei, falls die TPF erachtet, dass zu dem Übermittlungsereignis ein Ereignistriggerimpuls passt, der Schritt B ferner aufweist: Bestimmen, mit der TPF, ob die Gebührenregelung, welche durch die CRF geliefert wird, verändert ist, falls dem so ist, Durchführen, mit der TPF eines Neu-Autorisierungsvorgangs, und anderenfalls Fortfahren mit dem Schritt C.

5. Verfahren nach Anspruch 4, wobei in dem Schritt B, falls die TPF bestimmt, dass sich die Gebührenregelung, welche durch die CRF geliefert wurde, verändert hat, vor dem Durchführen eines Neu-Autorisierungsvorgangs mit der TPF, ferner Folgendes vorgesehen ist: Bestimmen, mit der TPF, ob eine Neu-Autorisierung aufgrund der veränderten Gebührenregelung notwendig ist, falls dies der Fall ist, Durchführen eines Neu-Autorisierungsvorgangs mit der TPF, und anderenfalls Fortfahren mit dem Schritt C.

6. Verfahren nach Anspruch 4, wobei in dem Schritt B, falls die TPF bestimmt, dass eine Neu-Autorisierung aufgrund der veränderten Gebührenregelung notwendig ist, vor dem Durchführen eines Neu-Autorisierungsvorgangs der TPF, ferner Folgendes vorgesehen ist: Bestimmen, mit der TPF, ob das Übermittlungsereignis, welches aktuell aufgetreten ist, zu einem Neu-Autorisierungstriggerimpuls passt, falls dieser passt, Durchführen eines Neu-Autorisierungsvorgangs mit der TPF, und Liefern des Übermittlungsereignisses, welches aktuell aufgetreten ist, dem Online Charging System bzw. dem Online-Gebührenerhebungssystem OCS und anderenfalls nur Durchführen eines Neu-Autorisierungsvorgangs mit der TPF.

7. Verfahren nach Anspruch 4, wobei das Durchführen eines Neu-Autorisierungsvorgangs ferner aufweist: Liefern, mit der TPF der veränderten Gebührenregelung an das OCS.

8. Verfahren nach Anspruch 1, wobei das Durchführen eines Neu-Autorisierungsvorgangs ferner aufweist: Liefern, mit der TPF des Übermittlungsereignisses, welches aktuell aufgetreten ist, an das OCS.

9. Verfahren nach Anspruch 1, wobei das Durchführen eines Neu-Autorisierungsvorgangs aufweist: Anfordern, mit der TPF der Neu-Autorisierung des Kredites in dem OCS und ferner Zurücksenden des OCS des autorisierten Kredits an die TPF.

10. Verfahren nach Anspruch 1, wobei die Ereignistriggerimpulse an die TPF durch die CRF geliefert werden.

11. Verfahren nach Anspruch 1, wobei die Neu-Autorisierungstriggerimpulse an die TPF durch das OCS oder über die CRF durch das OCS geliefert werden.

## Revendications

1. Procédé de gestion de déclencheurs d'évènements et de déclencheurs de ré-autorisation dans une facturation basée sur le flux, comprenant les étapes suivantes :
A. une fonction de plan de trafic (TPF) détermine si un évènement de type support correspond à un déclencheur d'évènement de manière à passer à l'étape B s'il y a correspondance, ou à passer à l'étape C dans le cas contraire ;
B. la TPF demande les règles de facturation depuis une fonction de réglementation de facturation (CRF) ;
C. la TPF détermine si l'évènement de type support correspond à un déclencheur de ré-autorisation de sorte que, s'il y a correspondance, ladite TPF effectue un processus de ré-autorisation, ou met fin au processus courant dans le cas contraire.

2. Procédé selon la revendication 1, dans lequel ladite étape B comprend en outre la demande par le TPF d'une règle de facturation à la CRF, et le renvoi par la CRF à la TPF d'une règle de facturation choisie.

3. Procédé selon la revendication 2, dans lequel ladite étape B comprend en outre la fourniture par le TPF à la CRF de l'évènement de type support qui se produit actuellement.

4. Procédé selon la revendication 2, dans lequel, si la TPF estime que l'évènement de type support correspond à un déclencheur d'évènement, ladite étape B comprend en outre une phase où la TPF détermine si la règle de facturation fournie par la CRF est modifiée et, si tel est le cas, la TPF effectue un processus de ré-autorisation, et sinon passe à l'étape C dans le cas contraire.

5. Procédé selon la revendication 4, lequel, lors de ladite étape B et si la TPF détermine que la règle de facturation fournie par la CRF est changée, avant que la TPF effectue un processus de ré-autorisation, comprend en outre une phase où la TPF détermine si une ré-autorisation est nécessaire du fait que de la règle de facturation soit changée et, si tel est le cas, la TPF effectue un processus de ré-autorisation, et sinon passe l'étape C dans le cas contraire.

6. Procédé selon la revendication 4, lequel, lors de ladite étape B et si la TPF détermine qu'une ré-autorisation est nécessaire du fait de la règle de facturation changée, avant que la TPF n'effectue un processus de ré-autorisation, comprend en outre une phase où la TPF détermine si l'évènement de type support qui se produit actuellement correspond à un déclencheur de ré-autorisation et, si tel est le cas, la TPF effectue un processus de ré-autorisation et fournit l'évènement de type support qui se produit actuellement à un système de facturation en ligne (OCS) ou, dans le cas contraire, la TPF effectue uniquement un processus de ré-autorisation.

7. Procédé selon la revendication 4, dans lequel ledit fait d'effectuer un processus de ré-autorisation comprend en outre la fourniture par le TPF de la règle de facturation changée à l'OCS.

8. Procédé selon la revendication 1, dans lequel ledit fait d'effectuer un processus de ré-autorisation comprend en outre la fourniture par le TPF de l'évènement de type support qui se produit actuellement à l'OCS.

9. Procédé selon la revendication 1, dans lequel ledit fait d'effectuer un processus de ré-autorisation comprend en outre la demande de la TPF d'une ré-autorisation du crédit dans l'OCS, et le renvoi par l'OCS du crédit autorisé à la TPF.

10. Procédé selon la revendication 1, dans lequel lesdits déclencheurs d'évènements sont fournis à la TPF par la CRF.

11. Procédé selon la revendication 1, dans lequel lesdits déclencheurs de ré-autorisation sont fournis à la TPF par l'OCS, ou par l'OCS par le biais de la CRF.
